# EUROPÄISCHE PATENTSCHRIFT

(11) **EP 2 508 726 B1**
(45) Veröffentlichungstag und Bekanntmachung des Hinweises auf die Patenterteilung: **13.05.2015**
(21) Anmeldenummer: 12001572.2
(22) Anmeldetag: 08.03.2012
(51) Int. Cl.: F01P 5/04, F01P 7/04, F16D 3/12, F16D 3/14

(54) **Kraftfahrzeug mit einem Antriebssystem der Motorkühlung**
Motor vehicle with a drive system of the cooling fan
Véhicule automobile avec un système d'entraînement du ventilateur de refroidissement moteur

(30) Priorität: 06.04.2011 DE 102011016204
(43) Veröffentlichungstag der Anmeldung: 10.10.2012
(73) Patentinhaber: MAN Truck & Bus AG, 80995 München (DE)
(72) Erfinder: Lechner, Matthias, 90461 Nürnberg (DE)

(56) Entgegenhaltungen:
- EP-A1- 0 515 785
- DE-A1-102007 013 300
- GB-A- 1 464 559
- GB-A- 2 247 512
- US-A- 2 902 985
- US-A- 4 987 985
- US-A- 5 207 561

## Beschreibung

Die Erfindung betrifft ein Kraftfahrzeug mit einem Antriebssystem der Motorkühlung bestehend aus einem Kühler, einem Verbrennungsmotor und einem über die Antriebswelle des Verbrennungsmotors angetriebenen Lüfter zum Kühlen des Motorkühlmediums, der zwischen dem Kühler und dem Verbrennungsmotor angeordnet ist. Ferner weist das Antriebssystem eine Viskosekupplung und einen Schwingungsdämpfer auf, die beide zwischen dem Verbrennungsmotor und dem Lüfter angeordnet sind, d.h. dass Viskosekupplung und Schwingungsdämpfer direkt oder indirekt in Wirkverbindung mit dem Verbrennungsmotor und dem Lüfter stehen. Der Schwingungsdämpfer gewährleistet eine Dämpfung und/oder Entkopplung der zwischen dem antriebswellenseitigen Ausgang des Verbrennungsmotors und dem Lüfter herrschenden Schwingungen.

Aus DE 2007001921 U1 ist ein Antriebssystem der Motorkühlung für schwere Kraftfahrzeuge bekannt, das auf der Antriebswelle zwischen einer Viskosekupplung und dem die Antriebswelle antreibenden Motor einen Drehschwingungsdämpfer aufweist, der den Verschleiß der Bauteile des Antriebssystems, der Lagerung des Lüfters und des Getriebes auf ein Maß beschränkt, das allein durch den üblichen Reibungsverschleiß entsteht.

US 4,987,985 lehrt einen Fahrzeuglüfter mit einem ein hydraulisches Verbindungsstück und eine Viskosekupplung umfassenden Antriebsstrang.

GB 1464559 beschreibt ein Rotationsgebläse dessen Lüfterräder zwischen elastischen Befestigungsringen befestigt ist.

EP 515785 lehrt einen Lüfterantrieb für den Kühler eines Fahrzeugs wobei eine Antriebswelle und einer an deren Ende angeordnete Viskosekupplung in die Öffnung eines Schwingungsdämpfers.

Der Erfindung liegt die Aufgabe zugrunde, ein Kraftfahrzeug mit einem Antriebssystem der Motorkühlung mit den Merkmalen des Oberbegriffs des Anspruches 1 derart weiterzubilden, dass eine Reduktion des motorinduzierten Abstrahlgeräusches von Lüftern auf einfache und kostengünstige Weise realisierbar ist. Ferner ist es Aufgabe der Erfindung, trotz der Implementierung von Mitteln zur Reduzierung des motorinduzierten Abstrahlgeräusches ein hinsichtlich der axialen Baulänge der Anordnung möglichst kompaktes Antriebssystem zu gewährleisten.

Diese Aufgabe wird durch die Merkmale des Kraftfahrzeugs nach Anspruch 1 bzw. des Schwingungsdämpfers gemäß Anspruch 14 gelöst. Vorteilhafte Weiterbildungen der Erfindung ergeben sich aus den Unteransprüchen 2 bis 13 bzw. 15.

Als Kern der Erfindung wird es angesehen, dass der Schwingungsdämpfer zwischen dem Lüfter und der Viskosekupplung angeordnet ist und an dieser Stelle die zwischen Lüfter und Viskosekupplung wirkenden Schwingungen dämpft und/oder entkoppelt. Die Anordnung des Schwingungsdämpfers im Anschlussbereich des Lüfters und der Viskosekupplung ermöglicht es, den Schwingungsdämpfer hinsichtlich seiner Anforderungen zu Festigkeit und Standfestigkeit optimiert und kostengünstig auszulegen. Dadurch dass der Schwingungsdämpfer auf seiner ersten Verbindungsseite lediglich den Lüfter umfasst, ist die von ihm abverlangte Festigkeit entsprechend gering, da einendseitig als Drehmoment beeinflussende Masse nur die des Lüfters selbst wirkt. Im Vergleich zum Stand der Technik bei dem das Dämpfungselement zwischen der Viskosekupplung und der diese antreibenden Antriebswelle angeordnet ist, muss der Schwingungsdämpfer darüber hinaus Kräfte resultierend aus der in Drehbewegung versetzten Masse der Viskosekupplung, Teilen der Antriebswelle und gegebenenfalls weiterer zwischen der Antriebswelle und dem Lüfter angeordneter Bauteile aufnehmen. Da der erfindungsgemäße Schwingungsdämpfer hinsichtlich der geringeren aufzunehmenden Kräfte "entlastet" wird, kann dieser gezielter auf die schwingungsdämpfende Funktion hin ausgelegt werden. Der Schwingungsdämpfer mit seinem elastischen Element wirkt in erster Linie als Körperschallschwingungsdämpfer, so dass die Übertragung des Körperschalls zwischen Motor und dem Lüfter unterbrochen oder zumindest erheblich reduziert wird. Damit geht eine Reduktion der Geräuschemissionen durch den Lüfter einher.

Die Viskosekupplung ist vorzugsweise temperaturabhängig geregelt und kann beispielsweise über ein Bimetall oder eine elektrische/elektronische Inputgröße in ihrer Wirkung veränderbar sein. Unter einem bestimmten Temperaturschwellwert ist die Viskosekupplung offen, die maximale Drehzahl des Lüfters wird dadurch begrenzt. Bei einem Anstieg der Temperatur regelt z.B. das Bimetall die Wirkungsweise der Viskosekupplung und koppelt diese in einen zweiten Zustand, in dem dann die Lüfterdrehzahl maximal der der entsprechenden Übersetzung der Motordrehzahl entspricht. An Stelle eines Bimetalls oder eines anderen Thermoelementes kann die Regelung auch über eine elektrische oder elektronische Ansteuerung der Viskosekupplung erfolgen. Durch das zeitweise Auskuppeln und der damit verbundenen Drehzahlreduktion des Lüfters wird der Energieaufwand hinsichtlich der Drehbewegung des Lüfters reduziert.

In einer bevorzugten Ausführungsform ist der Schwingungsdämpfer als Verbindungs-mittel von Lüfter und Viskosekupplung konzipiert. Das bedeutet, dass der Schwingungsdämpfer neben seiner Funktion der Schwingungsdämpfung ferner als Verbindungsmittel zwischen dem Lüfter und der Viskosekupplung wirkt. Diese Maßnahme hat den Vorteil, dass der Schwingungsdämpfer beispielsweise als stoffschlüssig verbundener oder lösbar befestigter Bestandteil des Lüfters und/oder stoffschlüssig verbundener oder lösbarer Bestandteil der Viskosekupplung ausgelegt werden kann. Insbesondere wenn der Schwingungsdämpfer lösbarer oder stoffschlüssig verbundener Bestandteil des Lüfters ist, wird die Montage des Schwingungsdämpfers an das restliche Antriebssystem vereinfacht. Auch kann es vorgesehen sein, ein bestehendes Antriebssystem durch Austausch eines bisherigen Lüfters mit einem erfindungsgemäßen Lüfter, der mit einem Schwingungsdämpfer versehen ist, nachzurüsten.

Um eine durch das Vorsehen eines Schwingungsdämpfers hervorgerufene geometrische Veränderungen an der Schnittstelle Lüfter/Viskosekupplung zu verhindern oder möglichst gering zu halten, kann dies vorteilhaft dadurch erreicht werden, dass der erfindungsgemäße Lüfter derart konstruiert ist, dass die Lüfter-Schwingungsdämpfer-Baugruppe gleichartige oder identische Flanschstellen (Schnittstellen) zu der Viskosekupplung aufweist als der bisherige Lüfter.

Hierbei ist ein Schwingungsdämpfer vorteilhaft, der in axialer Richtung parallele steife und elastische Schichten aufweist.

Wenn der Bauraum in Axialrichtung es zulässt, kann es alternativ vorgesehen sein, dass ein bestehender Lüfter durch ein Zwischenschalten eines erfindungsgemäßen Schwingungsdämpfers der sowohl mit der Lüfterschnittstelle als auch mit der Viskosekupplungsanschlussstelle korrespondiert ausgerüstet wird.

Eine weitere vorteilhafte Maßnahme ist es, wenn der Schwingungsdämpfer stoffschlüssig und/oder formschlüssig mit dem Lüfter verbunden ist. Insbesondere eine stoffschlüssige Verbindung des Schwingungsdämpfers mit dem Lüfter ermöglicht eine wirkungsvolle Lüfter-Schwingungsdämpfer-Baugruppe die gleichzeitig minimalen Bauraum beansprucht. Der Stoffschluss kann durch Kleben oder Aufvulkanisieren des Schwingungsdämpfers an den Lüfter erfolgen.

In einer bevorzugten Ausführungsform ist der Schwingungsdämpfer ringförmig oder nach Art eines Hohlzylinders ausgebildet, wobei zumindest im Endmontagezustand des Schwingungsdämpfers in dessen zentraler Ausnehmung wenigstens Bereiche der Viskosekupplung und/oder wenigstens Bereiche der zur Viskosekupplung führenden Antriebswelle umgeben und/oder umschlossen werden. Dadurch dass der Schwingungsdämpfer ringförmig oder nach Art eines Hohlzylinders ausgebildet ist und die zentrale Ausnehmung des Schwingungsdämpfers zur Aufnahme von Bereichen der Viskosekupplung dient, kann bei kompakter Dimensionierung eine Dämpfung des Lüfterrades gewährleistet werden.

Beispielsweise weist der Schwingungsdämpfer eine Ringbreite auf, die maximal den Innenradius der zentralen Ausnehmung oder maximal 3/4, 3/5, ½, 2/5 oder maximal ¼ des Innenradius der zentralen Ausnehmung entspricht. Die Ringbreite ist dabei als radiale Wanddicke des ringförmigen oder nach Art eines Hohlzylinders ausgebildeten Schwingungsdämpfers zu verstehen, also als Differenz des Innen- und Außenradius des Kreisrings. Ein derartiger ringförmiger Schwingungsdämpfer dessen zentrale Ausnehmung relativ zu der Ringbreite größer oder gleich dimensioniert ist, ermöglicht einen ausreichend festen und ausreichend dämpfenden Schwingungsdämpfer.

Hinsichtlich der Abmaße des Lüfters haben sich Verhältnisse als vorteilhaft erwiesen, deren Verhältnis des Radius des Lüfters zu dem Innenradius des Schwingungsdämpfers (zentrale Ausnehmung) maximal 25:1, vorzugsweise maximal 14:1, vorzugsweise maximal 9,5:1, besonders bevorzugt maximal 8,5:1 oder maximal 7,5:1, beträgt.

Dies bedeutet, dass der Schwingungsdämpfer ausgehend vom Lüfterradius relativ zentrumsfern angeordnet ist und damit in der zentralen Ausnehmung des Schwingungsdämpfers ausreichend Platz zur Aufnahme weiterer Elemente des Antriebsstranges zur Verfügung steht und gleichzeitig der Materialbedarf für den Schwingungsdämpfer zur Gewährleistung seiner Festigkeiten gering gehalten werden kann. Auch sind die am zentrumsfernen Ort wirkenden, von dem Dämpfungselement aufzunehmenden Kräfte geringer als bei einer zentrumsnahen Anordnung des Schwingungsdämpfers.

Eine weitere vorteilhafte Ausbildung ist darin zu sehen, dass die Ringtiefe des Schwingungsdämpfers maximal der Ringbreite, vorzugsweise maximal ¾ der Ringbreite, besonders bevorzugt maximal der Hälfte der Ringbreite des Schwingungsdämpfers entspricht. Dadurch dass der Schwingungsdämpfer relativ zentrumsfern als Kreisring angeordnet ist, bietet seine axiale Anschlussfläche einen relativ großen Flächenbetrag, so dass zur Realisierung der notwendigen Festigkeit und Standfestigkeit des Schwingungsdämpfers zu seinen weiteren, sich in axialer Richtung anschließenden Materialkomponenten/Verbindungspartnern eine nur geringe Ringtiefe und damit ein nur geringer Bauraumbedarf in axialer Richtung erforderlich ist.

Erfindungsgemäß ist der Schwingungsdämpfer wenigstens zweiteilig aufgebaut und umfasst dabei, zumindest ein steifes Anschlusselement sowie mindestens ein elastisches Dämpfungselement. Das Anschlusselement kann hierbei die Funktion der Verbindung des Schwingungsdämpfers mit der Viskosekupplung übernehmen und kann damit ein geeignetes Widerlager bilden um beispielsweise mit lösbaren Befestigungselementen wie Schrauben eine Verbindung des Schwingungsdämpfers und der Viskosekupplung zu erreichen. Das elastische Dämpfungselement ist einendseitig vorzugsweise stoffschlüssig mit dem Anschlusselement und andersseitig vorzugsweise stoffschlüssig mit dem Lüfter verbunden, so dass das Dämpfungselement die Dämpfungsfunktion des Schwingungsdämpfers ausführt. In einer weiteren bevorzugten Ausführungsform ist das Dämpfungselement sandwichartig zwischen einem ersten Anschlusselement zur Verbindung des Schwingungsdämpfers mit der Viskosekupplung und einem zweiten Anschlusselement zur Verbindung des Schwingungsdämpfers mit dem Lüfter ausgebildet. Hierbei kann das zweite Anschlusselement als Widerlager für Befestigungselemente zur Befestigung eines Lüfters am Schwingungsdämpfer dienen.

Alternativ ist das elastische Dämpfungselement stoffschlüssigen mit dem Lüfter verbunden, so dass das zweite Anschlusselement zur Verbindung des Schwingungsdämpfers mit dem Lüfter entbehrbar ist.

Der wenigstens zwei Elemente umfassende Aufbau des Schwingungsdämpfers kann ferner derart ausgebildet sein, dass das Dämpfungselement wenigstens zwei voneinander beabstandete Ringsegmente umfasst, wobei der Zwischenraum zwischen den Ringsegmenten zumindest bereichsweise frei und/oder mit einem Element versehen ist, das eine zum Dämpfungselement unterschiedliche Elastizität aufweist. Die Freiräume bzw. die Zwischenräume mit dem Element einer unterschiedlichen Elastizität ermöglichen eine gezielte Beeinflussung der schwingungsdämpfenden Eigenschaften des Schwingungsdämpfers. Beispielsweise ist der Schwingungsdämpfer mit wenigstens einem Dämpfungselementbereich versehen, der über Sollbruchstellen aus dem Schwingungsdämpfer herausgebrochen werden kann. Hierbei ist es vorteilhaft, dass durch wahlweises herausbrechen einer oder mehrerer Dämpfungselementbereiche über deren Sollbruchstellen eine Anpassung des Dämpfungsverhaltens nach der Fertigung des Dämpfungselementes ausführbar ist. Auch ist es möglich, sowohl das Anschlusselement als auch das Dämpfungselement als Ringsegmente auszubilden, die zum Beispiel deckungsgleich oder zueinander versetzt ausgerichtet sind.

Ein weiterer erfindungsgemäßer Aspekt ist es, das Anschlusselement mit wenigstens einer Fixiermittelaufnahmebohrung zu versehen, die sich an eine Fixiermittelaufnahmeausnehmung in dem Dämpfungselement anschließt. Vorzugsweise ist die Fixiermittelaufnahmeausnehmung rechtwinklig zu der Fixiermittelaufnahmebohrung ausgerichtet. Eine Schraube wird als Fixiermittel verwendet, deren Schraubenschaft durch die Fixiermittelaufnahmebohrung hindurchgeführt wird und dessen Schraubkopf in die Fixiermittelaufnahmeausnehmung in Höhe des Dämpfungselementes versenkt und/oder zumindest zum Teil aufnehmbar ist.

In diesem Zusammenhang ist es besonders vorteilhaft, wenn die Geometrie und/oder die Dimensionierung der Fixiermittelaufnahmeausnehmung und die Geometrie und/oder die Dimensionierung der in dieser Fixiermittelausnahmeaufnehmung aufzunehmenden Fixiermittel derart ausgelegt ist, dass zumindest im Endmontagezustand das Dämpfungselement im Bereich der Fixiermittelaufnahmeausnehmung wenigstens bereichsweise das Fixiermittel kontaktiert.

Am Beispiel einer Schraube als Fixiermittel würde dies bedeuten, dass der Schraubkopf zumindest bereichsweise das die Fixiermittelaufnahmeausnehmung begrenzende Dämpfungselement berührt. Neben der maximalen Raumausnutzung dieser Maßnahme - dadurch dass eine maximale Fläche für das Dämpfungselement zum Kontakt weitere Elemente bereitsteht und gleichzeitig nur ein notwendiger Raum zur Aufnahme der Schraubköpfe benötigt wird - ist ein weiterer Vorteil darin zu sehen, dass durch den Kontakt des Schraubkopfes mit dem Dämpfungselement eine Sicherung der Schraube vor Herausdrehen einhergeht. Insbesondere Schrauben an bewegten Teilen neigen dazu, sich über die Betriebsdauer zu lockern, so dass eine derartige Beaufschlagung des Schraubkopfes durch das Dämpfungselement (z.B. Klemmen) diese Gefahr reduzieren kann.

In einer konkreten Ausgestaltung würde als Schraube eine Innensechskantschraube verwendet werden, deren Schraubkopfmantelfläche die Innenwandfläche oder hervorgehobene Bereiche der Innenwandfläche berührt. Damit erfüllt das Dämpfungselement sowohl eine Dämpfungsfunktion als auch eine die Schraubverbindung sichernde Funktion.

Das Anschlusselement und das Dämpfungselement sind zueinander parallel und in axialer Richtung zueinander versetzt angeordnet. Beispielsweise ist sowohl das Anschlusselement als auch das Dämpfungselement jeweils als Kreisring ausgebildet die konzentrisch und axial versetzt ausgerichtet und an den Ringflächen miteinander verbunden sind. Anschluss- und Dämpfungselement liegen hierbei in eigenen, parallelen und aneinander angrenzenden Ebene, die sich rechtwinklig zur Achsrichtung erstrecken.

Neben dem beschriebenen Antriebssystem zeichnet sich die Erfindung insbesondere durch den hierfür konzipierten Schwingungsdämpfer aus. Dabei ist die Ringform und/oder hohlzylindrische Form des Schwingungsdämpfers eine bevorzugte Ausführung, wobei das Lüfteraußendurchmesser-zu-axialer-Tiefe(Dicke)-Verhältnis im Bereich von 7:1 bis 15:1, bevorzugt im Bereich von 8:1 bis 10:1 liegt.

Die Neuerung ist anhand von Ausführungsbeispielen in den Zeichnungsfiguren näher erläutert. Diese zeigen:

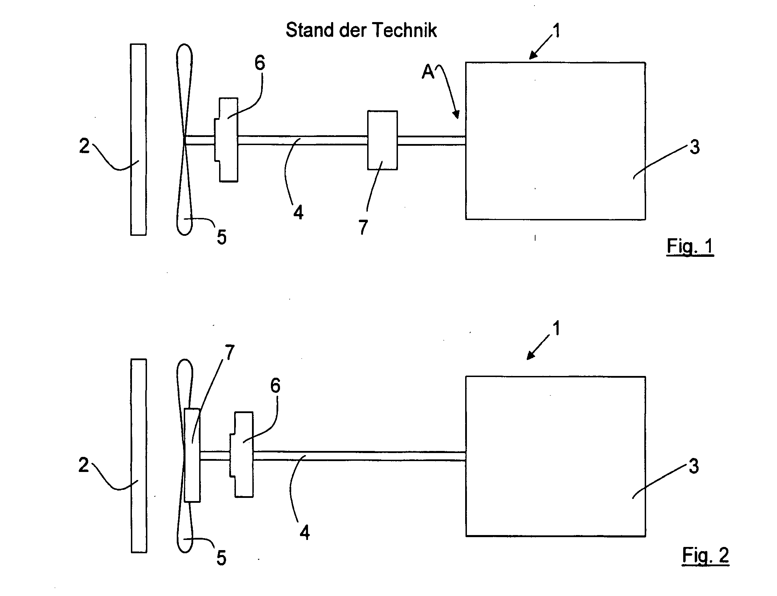

- Figur 1:: eine schematische Darstellung der Anbindung eines Lüfters an dem Verbrennungsmotor gemäß dem Stand der Technik;
- Figur 2:: eine schematische Darstellung einer erfindungsgemäßen Variante der Anordnung des Schwingungsdämpfers an dem Lüfter;
- Fig. 3:: eine schematische Darstellung einer weiteren Ausführungsform wonach der Schwingungsdämpfer an der Viskosekupplung angeordnet ist;
- Fig. 4:: eine schematische Darstellung einer alternativen Variante, bei welcher der Lüfter unmittelbar über den Schwingungsdämpfer mit der Viskosekupplung verbunden ist;
- Fig. 5:: eine schematische Darstellung einer alternativen Ausführungsform, bei der die Viskosekupplung auf der dem Kühler zugewandten Seite des Lüfters angeordnet ist;
- Fig. 6:: eine schematische Darstellung gemäß Zeichnungsfigur 5, jedoch mit einer lösbaren Anbindung des Schwingungsdämpfers an dem Lüfter;
- Fig. 7a:: eine schematische Schnittdarstellung der Anbindung der Viskosekupplung an dem Schwingungsdämpfer im Detail, wobei Viskosekupplung und Schwingungsdämpfer voneinander beabstandet sind (Vormontagezustand);
- Fig. 7b:: eine schematische Schnittdarstellung gemäß Figur 7a, wobei Viskosekupplung und Schwingungsdämpfer zusammengesetzt sind (Endmontagezustand);
- Fig. 8:: eine schematische Schnittdarstellung einer Ausführungsform gemäß Figur 6;
- Fig. 9:: eine schematische Stirnansicht eines mit einem Schwingungsdämpfer versehenen Lüfters.

Zeichnungsfigur 1 zeigt ein Antriebssystem 1 der Motorkühlung für Kraftfahrzeuge, bestehend aus einem Kühler 2, einem Verbrennungsmotor 3, einem über die Antriebeswelle 4 des Verbrennungsmotors 3 der angetriebenen Lüfter 5 der zwischen dem Kühler 2 und dem Verbrennungsmotor 3 angeordnet ist. Ferner ist zwischen dem Verbrennungsmotor 3 und dem Lüfter 5 eine Viskosekupplung 6 angeordnet, diese ist vorzugsweise indirekt thermisch oder direkt elektronisch/elektrisch ansteuerbar und in ihrem Drehmoment und/oder Übersetzungsverhalten verstellbar, oder zumindest hinsichtlich der Übertragung der maximalen Drehzahl begrenzbar.

Zwischen der Viskosekupplung 6 und dem Verbrennungsmotor 3 ist ein Schwingungsdämpfer 7 angeordnet, der Schwingungen zwischen dem antriebswellenseitigen Ausgang A des Verbrennungsmotors 3 und dem Lüfter 5 dämpft und/oder entkoppelt.

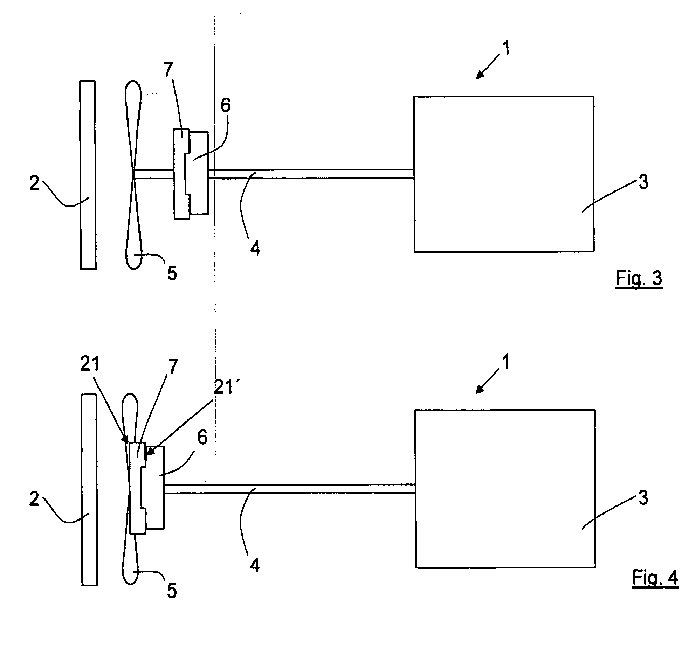

In einer ersten vorteilhaften Ausgestaltung des Erfindungsgedankens gemäß Zeichnungsfigur 2 ist der Schwingungsdämpfer 7 zwischen dem Lüfter 5 und der Viskosekupplung 6 angeordnet. Gemäß Zeichnungsfigur 2 ist der Schwingungsdämpfer 7 unmittelbar am Lüfter 5 befestigt und/oder in diesen stoff- oder formschlüssig eingearbeitet. In einer alternativen Ausführungsform gemäß Figur 3 ist der Schwingungsdämpfer 7 unmittelbar an der Viskosekupplung 6 befestigt. Eine bevorzugte Ausführungsform ist aus Zeichnungsfigur 4 erkennbar, wonach der Schwingungsdämpfer 7 an einer ersten Endseite 21 unmittelbar mit dem Lüfter 5 und an der gegenüberliegenden Endseite 21' mit der Viskosekupplung 6 unmittelbar verbunden ist. Insbesondere in der Ausführung gemäß Figur 4 wirkt der Schwingungsdämpfer 7 als Verbindungsmittel von Lüfter 5 und Viskosekupplung 6.

In einer besonders bevorzugten Ausführungsform gemäß den Zeichnungsfiguren 5 bis 8 ist der Schwingungsdämpfer 7 und der Lüfter 5 mit einer zentralen Ausnehmung 8 versehen, durch welche zumindest Bereiche der Antriebswelle 4 und/oder der Viskosekupplung 6 hineinreichen. Hiermit wird es ermöglicht, die Viskosekupplung 6 an der dem Kühler 2 zugewandten Seite des Lüfters 5 anzuordnen.

Besonders bevorzugt ist der Schwingungsdämpfer 7 dabei ringförmig und/oder nach Art eines Hohlzylinders ausgebildet, sodass von der zentralen Ausnehmung 8 im Endmontagezustand zumindest Bereiche der Viskosekupplung 6 und/oder zumindest Bereiche der zur Viskosekupplung 6 führenden Antriebswelle 4 umgeben werden.

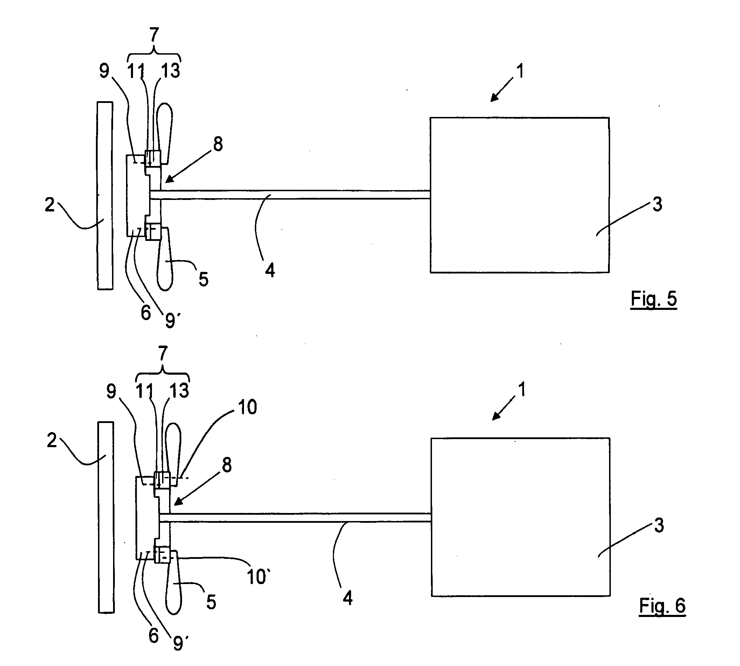

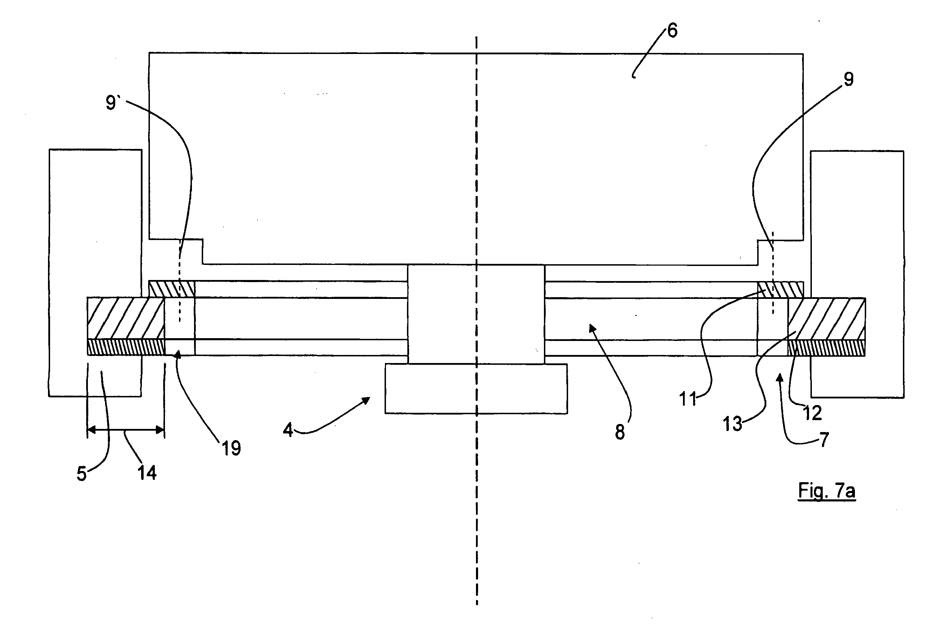

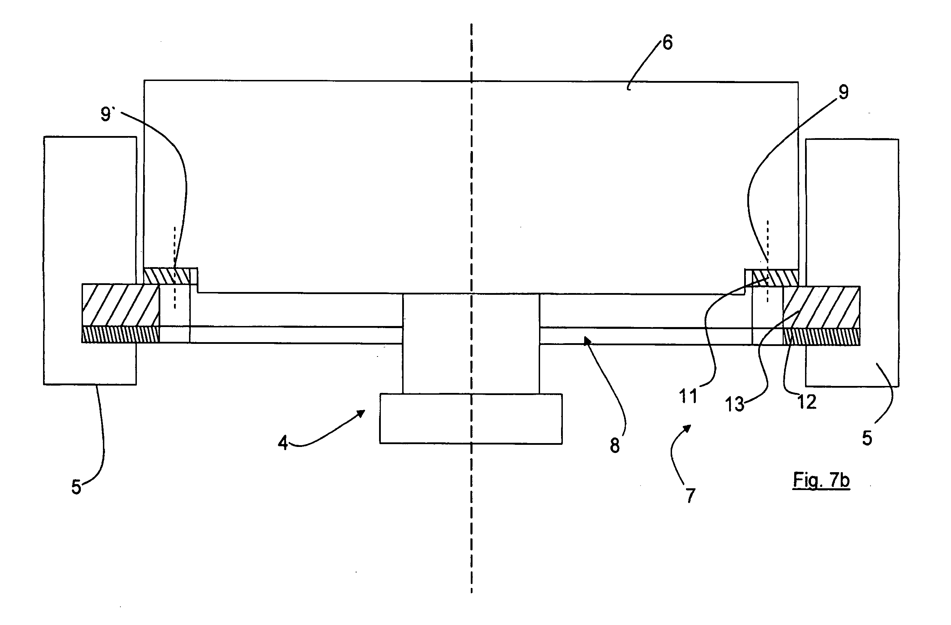

In Zeichnungsfigur 5 ist der Lüfter 5 mit dem Schwingungsdämpfer 7 einstückig ausgebildet und/oder formschlüssig verbunden und über Verbindungselemente 9, 9' (z.B. Schrauben oder Nieten) mit der Viskosekupplung 6 verbunden. Im Gegensatz dazu sind in Zeichnungsfigur 6 neben den Verbindungselementen 9, 9' zur Verbindung des Schwingungsdämpfers 7 mit der Viskosekupplung 6 weitere Verbindungselemente 10, 10' vorgesehen, welche zur lösbaren Verbindung des Schwingungsdämpfers 7 mit dem Lüfter 5 dienen. In den Zeichnungsfiguren 5 bis 8 ist die Viskosekupplung 6 als dem Kühler 2 nächstliegendes Element ausgelegt, dies ist vorteilhaft, da die Viskosekupplung bevorzugt einer Kühlung ausgesetzt werden sollte und dies durch eine derartige Anordnung gewährleistet werden kann. Die Wirkverbindung ist jedoch auch in den Anordnungen gemäß der Figuren 5 bis 8 folgende: Verbrennungsmotor 3, Antriebswelle 4, Viskosekupplung 6, Schwingungsdämpfer 7, Lüfterrad 5, damit ist auch in dieser Ausführungsform die Viskosekupplung 6 und der Schwingungsdämpfer 7 zwischen dem Verbrennungsmotor 3 und dem Lüfter 5 angeordnet.

In den Zeichnungsfiguren 7a, 7b und 8 sind Details der Verbindung der Viskosekupplung 6 mit dem Lüfter 5 beschrieben. Der dargestellte Schwingungsdämpfer 7 umfasst hierbei drei Teile 11, 12, 13 wovon zwei als Anschlusselemente 11,12 und ein als elastisches Dämpfungselement 13 vorgesehen sind. Das Dämpfungselement 13 ist hierbei nach Art eines Sandwichs an zwei gegenüberliegenden Seiten mit jeweils einem Anschlusselement 11, 12 versehen. Alle drei Elemente 11, 12, 13 sind in den Zeichnungsfiguren 7a, 7b und 8 der dargestellten Ausführungsform als zueinander konzentrische Kreisringe ausgebildet, die in axialer Richtung schichtweise miteinander verbunden sind. Die Elemente 11, 12, 13 müssen hierbei - wie dargestellt - nicht einen vollständigen Kreisring bilden, sondern können auch durch Unterbrechungen lediglich als Kreisringsegmente ausgebildet sein. Im Falle der ringsegmentartigen Ausbildung der Anschluss- oder Dämpfungselemente 11, 12, 13 kann es vorgesehen sein, die Zwischenräume der Ringsegmente mit einem weiteren Element (nicht dargestellt) zumindest bereichsweise zu verfüllen, wobei dieses weitere Element eine zum Dämpfungselement 13 unterschiedliche Elastizität aufweist.

In der Ausführungsform gemäß den Zeichnungsfiguren 7a und 7b ist das Dämpfungselement 13 und das Anschlusselement 12 unlösbar mit dem Lüfter 5 verbunden, beispielsweise stoffschlüssig durch einen Spritzgießvorgang. Das Anschlusselement 11, welches ausschließlich über die stoffschlüssige Verbindung mit dem Dämpfungselement 13 und damit indirekt mit dem Lüfter 5 verbunden ist, dient als Anschlussschnittstelle der Lüfter-Schwingungsdämpfer-Baugruppe 5, 7 mit der Viskosekupplung 6. In Zeichnungsfigur 7a sind die Viskosekupplung 6 in einer zu der Baugruppe 5, 7 beabstandeten Position dargestellt. In Zeichnungsfigur 7b ist die Lüfter-Schwingungsdämpfer-Baugruppe 5, 7 über die Verbindungselemente 9, 9' mit der Viskosekupplung lösbar verbunden (Endmontage).

In Zeichnungsfigur 8 ist eine Alternative zu der Ausführungsform gemäß Zeichnungsfigur 7b dargestellt, wobei zwei wesentliche Unterschiede darin liegen, dass einerseits das Lüfterrad 5 über die Verbindungselemente 10, 10' lösbar mit dem Anschlusselement 12 des Schwingungsdämpfers 7 verbunden ist und wobei der Lüfter 5 ausschließlich mit dem Anschlusselement 12 stoffschlüssig verbunden ist. Selbstverständlich kann eine Ausführung auch nur eine der beiden Änderungen umfassen.

In Zeichnungsfigur 9 werden bevorzugte Abmessungen der Lüfter-Schwingungsdämpfer-Baugruppe 5,7 erläutert. In der erfindungsgemäßen Ausführungsform weist der Schwingungsdämpfer 7 eine Ringbreite 14 auf, die maximal dem Innenradius 15 der zentralen Ausnehmung 8 oder maximal ¾ , 3/5, ½, 2/5 oder maximal ¼ des Innenradius 15 der Ausnehmung 8 des Schwingungsdämpfers 7 beträgt.

Ferner ist es vorteilhaft, wenn das Verhältnis des Außenradius 16 des Lüfters 5 zu dem Innenradius 15 des Schwingungsdämpfers 7 maximal 25:1, vorzugsweise maximal 14:1, vorzugsweise maximal 9,5:1, vorzugsweise 8,5:1 oder besonders bevorzugt maximal 7,5:1 beträgt.

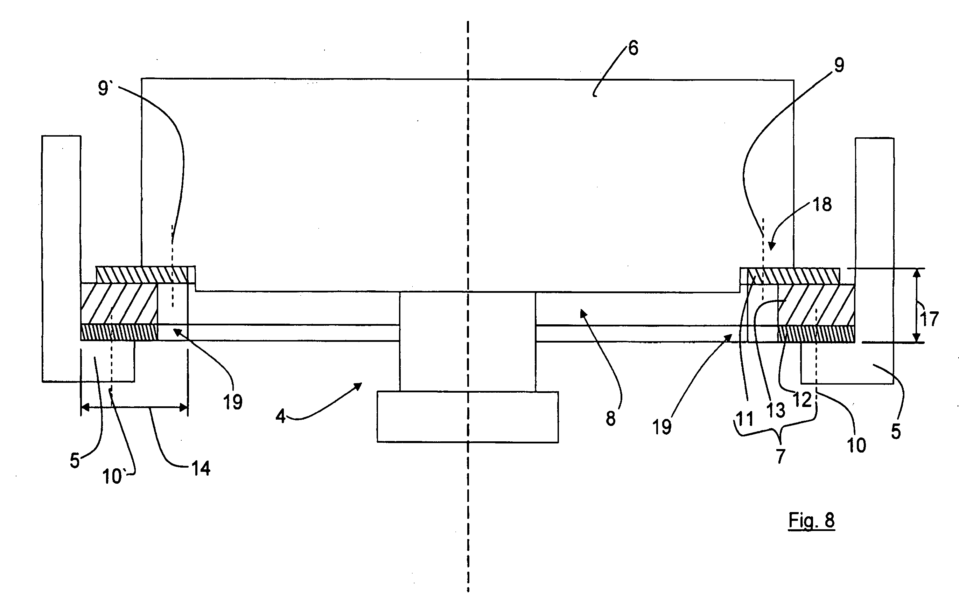

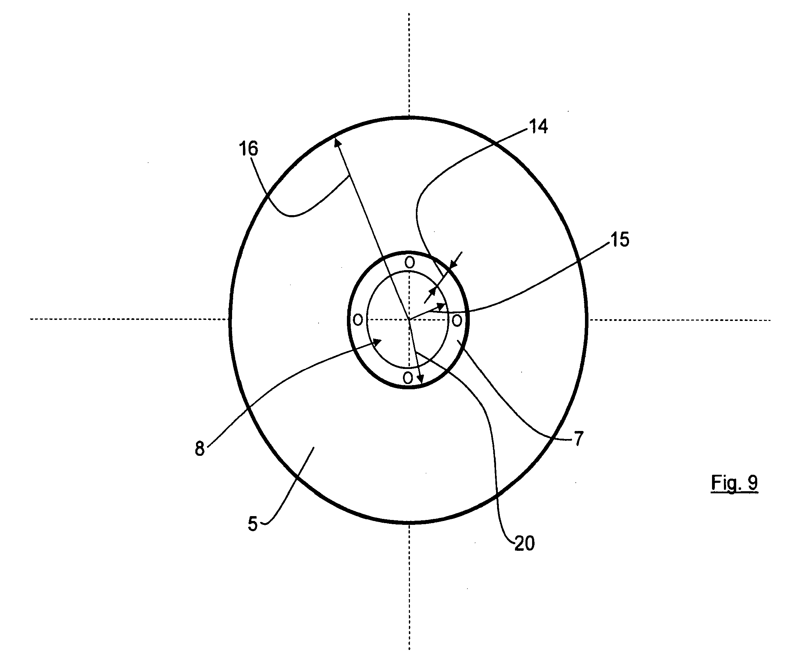

Ein weiterer Vorteil ist darin zu erkennen, dass in der Zusammenschau der Figuren 8 und 9 die Ringtiefe 17 des Schwingungsdämpfers 7 maximal der Ringbreite 14 des Schwingungsdämpfers 7, maximal ¾ Ringbreite 14, bevorzugt maximal der Hälfte der Ringbreite 14 des Schwingungsdämpfers 17 entspricht.

Wie in den Zeichnungsfiguren 7a, 7b und 8 erkennbar ist, kann das Anschlusselement 11 wenigstens eine Fixiermittelaufnahmebohrung 18 umfassen, die sich an eine Fixiermittelaufnahmeausnehmung 19 in dem Dämpfungselement 13 und dem weiteren Anschlusselement 12 anschließt. Die Fixiermittelaufnahmebohrung 18 ist in den Zeichnungsfiguren nur indirekt durch das gestrichelt dargestellte Verbindungselement 9, 9' angedeutet. Die Fixiermittelaufnahmeausnehmung 19 hingegen ist als Materialausnehmung in der Schnittebene durch Unterbrechung des die Ringbreite 14 bildenden Bereiches erkennbar.

Eine weitere vorteilhafte Merkmalskombination ist es, wenn der Schwingungsdämpfer 7 eine Ringform und/oder eine Hohlzylindrische Form aufweist und dabei der Außenradius 20 des Schwingungsdämpfers 7 zu der axialen Tiefe (Ringtiefe 17) des Schwingungsdämpfers 7 ein Verhältnis im Bereich von 7:1 bis 15:1, bevorzugt im Bereich von 8:1 bis 10:1 beträgt.

Vorteilhafte absolute Abmessungen für den Schwingungsdämpfer 7 sind:
- für die Ringbreite 14: 10 bis 80 mm, vorzugsweise 20 bis 40 mm;
- für den Innenradius 15: 50 bis 150 mm, vorzugsweise 70 bis 120 mm;
- für den Außenradius 20: 90 bis 200 mm, vorzugsweise 90 bis 150 mm;
- für die Ringtiefe 17: 10 bis 50 mm, vorzugsweise 10 bis 25 mm.

Der Durchmesser des Lüfters 5 kann zwischen 150 und 950 mm, vorzugsweise zwischen 600 und 950 mm betragen. Die Vorteile der Erfindung kommen vor allem bei Lüfterdurchmessern von 600 bis 950 mm zum Tragen, da dort eine höhere Lüftermasse und höhere Hebelkräfte auf das Dämpfungselement 13 einwirken und durch die erfindungsgemäße Bauform des Schwingungsdämpfers 7 samt seinem Dämpfungselement 13 die erforderliche Festigkeit und Schalldämpfungseigenschaft gewährleistet werden kann. Grundsätzlich sind auch Lüfterdurchmesser größer 950 mm in der erfindungsgemäßen Bauform ausführbar.

Für die vorteilhaften Verhältnisse der Abmessungen des Schwingungsdämpfers 7 und des Lüfters 5 sind folgende Verhältnisbereiche zweckdienlich. Für das Verhältnis:
- Ringbreite 14 zu Innenradius 15: zwischen 1,00 bis 0,05;
- Radius 16 des Lüfters 5 zu Innenradius 15: zwischen 2,5 bis 25, vorzugsweise 2,5 bis 9,5;
- Außenradius 20 zu Ringtiefe 17: zwischen 7,0 bis 15,0.

## Patentansprüche

1. Kraftfahrzeug mit einem Antriebssystem für einen Lüfter (5) einer Motorkühlung wobei das Kraftfahrzeug einen Kühler (2) zur Rückkühlung eines Kühlmediums zur Kühlung eines Verbrennungsmotors (3) aufweist und wobei ein über eine Antriebswelle (4) des Verbrennungsmotors (3) angetriebener Lüfter (5) zum Kühlen des Motorkühlmediums, zwischen dem Kühler (2) und dem Verbrennungsmotor (3) angeordnet ist und das Antriebssystem (1) eine Viskosekupplung (6) und einen ein elastisches Element umfassenden Schwingungsdämpfer (7) der die Schwingungen zwischen dem antriebswellenseitigen Ausgang A des Verbrennungsmotors (3) und dem Lüfter (5) dämpft und/oder entkoppelt umfasst, wobei die Viskosekupplung (6) und der Schwingungsdämpfer (7) zwischen dem Verbrennungsmotor (3) und dem Lüfter (5) angeordnet sind, wobei der Schwingungsdämpfer (7) zwischen dem Lüfter (5) und der Viskosekupplung (6) angeordnet ist und die zwischen Lüfter (5) und Viskosekupplung (6) wirkenden Schwingungen dämpft und/oder entkoppelt,
wobei der Schwingungsdämpfer (7) wenigstens zweiteilig aufgebaut ist und zumindest ein steifes Anschlusselement (11,12) sowie mindestens ein elastisches Dämpfungselement (13) umfasst, wobei das Anschlusselement (11, 12) und das Dämpfungselement (13) zueinander parallel und in axialer Richtung zueinander versetzt angeordnet sind, **dadurch gekennzeichnet, dass**
- das Anschlusselement (11,12) wenigstens eine Fixiermittelaufnahmebohrung (18) umfasst die sich an eine Fixiermittelaufnahmeausnehmung (19) in dem Dämpfungselement (13) anschließt und
- das Fixiermittel als Schraube mit Schraubenkopf und Schraubenschaft ausgebildet ist, und die Fixiermittelaufnahmebohrung (18) und die Fixiermittelaufnahmeausnehmung (19) derart ausgebildet sind, dass der Schraubenschaft durch die Fixiermittelaufnahmebohrung (18) hindurchgeführt wird und der Schraubenkopf in die Fixiermittelaufnahmeausnehmung in Höhe des Därnpfungselementes. I (13) versenkt oder zumindest zum Teil aufgenommen wird.

2. Kraftfahrzeug nach Anspruch 1, **dadurch gekennzeichnet, dass** der Schwingungsdämpfer (7) als Verbindungsmittel von Lüfter (5) und Viskosekupplung (6) konzipiert ist.

3. Kraftfahrzeug nach Anspruch 1 oder 2, **dadurch gekennzeichnet, dass** der Schwingungsdämpfer (7) lösbar mit dem Lüfter (5) und/oder der Viskosekupplung (6) verbunden ist.

4. Kraftfahrzeug nach einem der vorhergehenden Ansprüche, **dadurch gekennzeichnet, dass** der Schwingungsdämpfer (7) stoff- und/oder formschlüssig mit dem Lüfter (5) verbunden ist. '

5. Kraftfahrzeug nach einem der vorhergehenden Ansprüche, **dadurch gekennzeichnet, dass** der Schwingungsdämpfer (7) ringförmig und/oder nach Art eines Hohlzylinders ausgebildet ist und im Endmontagezustand in der seiner zentralen Ausnehmung (8) des Schwingungsdämpfers (7) zumindest Bereiche der Viskosekupplung (6) und/oder zumindest . Bereiche der zur Viskosekupplung (6) führenden Antriebswelle (4) aufnehmbar sind.

6. Kraftfahrzeug nach Anspruch 5, **dadurch gekennzeichnet, dass** der Schwingungsdämpfer (7) eine Ringbreite aufweist, die maximal dem Innenradius (15) der zentralen Ausnehmung (8) oder maximal ¾, 3/5, ½, 2/5 oder maximal ¼ des Innenradius (15) der zentralen Ausnehmung (8) entspricht.

7. Kraftfahrzeug nach Anspruch 5 oder 6, **dadurch gekennzeichnet, dass** das Verhältnis des Radius (16) des Lüfters (5) zu dem Innenradius (15) der zentralen Ausnehmung (8) des Schwingungsdämpfers (7) maximal 25:1, vorzugsweise maximal 14:1, vorzugsweise maximal 9,5:1, vorzugsweise maximal 8,5:1, besonders bevorzugt maximal 7,5:1 beträgt.

8. Kraftfahrzeug nach einem der Ansprüche 5 bis 7, **dadurch gekennzeichnet, dass** eine Ringtiefe (17) des Schwingungsdämpfers (7) maximal der Ringbreite (14), vorzugsweise maximal ¾ der Ringbreite (14), besonders bevorzugt maximal der Hälfte der Ringbreite (14) des Schwingungsdämpfers (7) entspricht.

9. Kraftfahrzeug nach Anspruch 1, **dadurch gekennzeichnet, dass** das Anschlusselement (11,12) und/oder das Dämpfungselement (13) wenigstens zwei voneinander beabstandete Ringsegmente umfasst, wobei der Zwischenraum zwischen den Ringsegmenten zumindest bereichsweise frei und/oder mit einem Element versehen ist, das eine zum Dämpfungselement (13) unterschiedliche Elastizität aufweist.

10. Kraftfahrzeug nach Anspruch 1, **dadurch gekennzeichnet, dass** die Geometrie und/oder die Dimensionierung der Fixiermittelaufnahmeausnehmung (19) und die Geometrie und/oder die Dimensionierung des in dieser Fixiermittelaufnahmeausnehmung (19) aufzunehmenden Fixiermittels (9, 9' ,10 ,10') derart ausgelegt ist, dass zumindest im Endmontagezustand das Dämpfungselement (13) im Bereich der Fixiermittelaufnahmeausnehmung (19) wenigstens bereichsweise das Fixiermittel (9, 9', 10, 10') kontaktiert.

## Claims

1. Motor vehicle with a drive system for a fan (5) of an engine cooling system, wherein the motor vehicle has a radiator (2) for re-cooling a cooling medium for cooling an internal combustion engine (3), and wherein a fan (5) which is driven by means of a driveshaft (4) of the internal combustion engine (3) and which serves for cooling the engine cooling medium is arranged between the radiator (2) and the internal combustion engine (3), and the drive system (1) comprises a viscous coupling (6) and a vibration damper (7) which comprises an elastic element and which dampens and/or decouples the vibrations between the driveshaft-side output A of the internal combustion engine (3) and the fan (5), wherein the viscous coupling (6) and the vibration damper (7) are arranged between the internal combustion engine (3) and the fan (5), wherein the vibration damper (7) is arranged between the fan (5) and the viscous coupling (6) and dampens and/or decouples vibrations acting between the fan (5) and the viscous coupling (6), wherein the vibration damper (7) is constructed from at least two parts and comprises at least one rigid connecting element (11, 12) and at least one elastic damping element (13), wherein the connecting element (11, 12) and the damping element (13) are arranged parallel to one another and so as to be offset relative to one another in the axial direction,
**characterized**
- **in that** the connecting element (11, 12) comprises at least one fixing means receiving bore (18) which adjoins a fixing means receiving recess (19) in the damping element (13), and
- the fixing means is in the form of a screw with screw head and screw shank, and the fixing means receiving bore (18) and the fixing means receiving recess (19) are designed such that the screw shank is passed through the fixing means receiving bore (18) and the screw head is countersunk or at least partially received in the fixing means receiving recess at the level of the damping element (13).

2. Motor vehicle according to Claim 1, **characterized in that** the vibration damper (7) is designed as a connecting means of the fan (5) and viscous coupling (6).

3. Motor vehicle according to Claim 1 or 2, **characterized in that** the vibration damper (7) is detachably connected to the fan (5) and/or to the viscous coupling (6).

4. Motor vehicle according to one of the preceding claims, **characterized in that** the vibration damper (7) is connected to the fan (5) in a cohesive and/or positively locking manner.

5. Motor vehicle according to one of the preceding claims, **characterized in that** the vibration damper (7) is formed in the shape of a ring and/or in the manner of a hollow cylinder and, in the fully assembled state, at least regions of the viscous coupling (6) and/or at least regions of the driveshaft (4) which leads to the viscous coupling (6) can be received in the central recess (8) of the vibration damper (7).

6. Motor vehicle according to Claim 5, **characterized in that** the vibration damper (7) has a ring width which corresponds at most to the inner radius (15) of the central recess (8) or at most to 3/4 , 3/5 , 1/2, 2/5 or at most 1/4 of the inner radius (15) of the central recess (8).

7. Motor vehicle according to Claim 5 or 6, **characterized in that** the ratio of the radius (16) of the fan (5) to the inner radius (15) of the central recess (8) of the vibration damper (7) amounts to at most 25:1, preferably at most 14:1, preferably at most 9.5:1, preferably at most 8.5:1, particularly preferably at most 7.5:1.

8. Motor vehicle according to one of Claims 5 to 7, **characterized in that** the ring depth (17) of the vibration damper (7) corresponds at most to the ring width (14), preferably at most to 3/4 of the ring width (14), particularly preferably to at most one half of the ring width (14) of the vibration damper (7).

9. Motor vehicle according to Claim 1, **characterized in that** the connecting element (11, 12) and/or the damping element (13) comprises at least two ring segments which are spaced apart from one another, wherein the intermediate space between the ring segments is, at least in regions, free and/or provided with an element which has a different elasticity than the damping element (13).

10. Motor vehicle according to Claim 1, **characterized in that** the geometry and/or the dimensioning of the fixing means receiving recess (19) and the geometry and/or the dimensioning of the fixing means (9, 9', 10, 10') to be received in said fixing means receiving recess (19) is configured such that, at least in the fully assembled state, the damping element (13) makes contact at least in regions with the fixing element (9, 9', 10, 10') in the region of the fixing means receiving recess (19).

## Revendications

1. Véhicule automobile comprenant un système d'entraînement pour un ventilateur (5) d'un refroidissement moteur, le véhicule automobile présentant un radiateur (2) pour le refroidissement de retour d'un réfrigérant pour le refroidissement d'un moteur à combustion interne (3) et un ventilateur (5) pour le refroidissement du réfrigérant de moteur, entraîné par le biais d'un arbre d'entraînement (4) du moteur à combustion interne (3), étant disposé entre le radiateur (2) et le moteur à combustion interne (3), et le système d'entraînement (1) comprenant un embrayage visqueux (6) et un amortisseur d'oscillations (7) comprenant un élément élastique, qui amortit et/ou désaccouple les oscillations entre la sortie A du moteur à combustion interne (3) du côté de l'arbre d'entraînement et le ventilateur (5), l'embrayage visqueux (6) et l'amortisseur d'oscillations (7) étant disposés entre le moteur à combustion interne (3) et le ventilateur (5), l'amortisseur d'oscillations (7) étant disposé entre le ventilateur (5) et l'embrayage visqueux (6) et amortissant et/ou désaccouplant les oscillations agissant entre le ventilateur (5) et l'embrayage visqueux (6), l'amortisseur d'oscillations (7) étant construit au moins en deux parties et comprenant au moins un élément de raccordement rigide (11, 12) ainsi qu'au moins un élément d'amortissement élastique (13), l'élément de raccordement (11, 12) et l'élément d'amortissement (13) étant disposés parallèlement l'un à l'autre et de manière décalée l'un par rapport à l'autre dans la direction axiale, **caractérisé en ce que**
- l'élément de raccordement (11, 12) comprend au moins un alésage de réception de moyen de fixation (18) qui se raccorde à un évidement de réception de moyen de fixation (19) dans l'élément d'amortissement (13) et
- le moyen de fixation est réalisé sous forme de vis avec une tête de vis et une tige de vis et l'alésage de réception de moyen de fixation (18) et l'évidement de réception de moyen de fixation (19) sont réalisés de telle sorte que la tige de vis soit guidée à travers l'alésage de réception de moyen de fixation (18) et que la tête de vis soit enfoncée ou reçue au moins en partie dans l'évidement de réception de moyen de fixation à la hauteur de l'élément d'amortissement (13).

2. Véhicule automobile selon la revendication 1, **caractérisé en ce que** l'amortisseur d'oscillations (7) est conçu sous forme de moyen de connexion du ventilateur (5) et de l'embrayage visqueux (6).

3. Véhicule automobile selon la revendication 1 ou 2, **caractérisé en ce que** l'amortisseur d'oscillations (7) est connecté de manière amovible au ventilateur (5) et/ou à l'embrayage visqueux (6).

4. Véhicule automobile selon l'une quelconque des revendications précédentes, **caractérisé en ce que** l'amortisseur d'oscillations (7) est connecté par engagement de matière et/ou par engagement par correspondance de formes au ventilateur (5).

5. Véhicule automobile selon l'une quelconque des revendications précédentes, **caractérisé en ce que** l'amortisseur d'oscillations (7) est réalisé sous forme annulaire et/ou à la manière d'un cylindre creux et dans l'état de montage final, au moins des régions de l'embrayage visqueux (6) et/ou au moins des régions de l'arbre d'entraînement (4) conduisant à l'embrayage visqueux (6) peuvent être reçues dans l'évidement central (8) de l'amortisseur d'oscillations (7).

6. Véhicule automobile selon la revendication 5, **caractérisé en ce que** l'amortisseur d'oscillations (7) présente une largeur annulaire qui correspond au maximum au rayon interne (15) de l'évidement central (8) ou au maximum à 3/4, 3/5, 1/2, 2/5 ou au maximum à 1/4 du rayon interne (15) de l'évidement central (8).

7. Véhicule automobile selon la revendication 5 ou 6, **caractérisé en ce que** le rapport du rayon (16) du ventilateur (5) au rayon interne (15) de l'évidement central (8) de l'amortisseur d'oscillations (7) est au maximum de 25:1, de préférence au maximum de 14:1, de préférence au maximum de 9,5:1, de préférence au maximum de 8,5:1, particulièrement préférablement au maximum de 7,5:1.

8. Véhicule automobile selon l'une quelconque des revendications 5 à 7, **caractérisé en ce qu'**une profondeur annulaire (17) de l'amortisseur d'oscillations (7) correspond au maximum à la largeur annulaire (14), de préférence au maximum à 3/4 de la largeur annulaire (14), particulièrement préférablement au maximum à la moitié de la largeur annulaire (14) de l'amortisseur d'oscillations (7).

9. Véhicule automobile selon la revendication 1, **caractérisé en ce que** l'élément de raccordement (11, 12) et/ou l'élément d'amortissement (13) comprennent au moins deux segments annulaires espacés l'un de l'autre, l'espace intermédiaire entre les segments annulaires étant au moins en partie libre et/ou étant pourvu d'un élément qui présente une élasticité différente de celle de l'élément d'amortissement (13).

10. Véhicule automobile selon la revendication 1, **caractérisé en ce que** la géométrie et/ou le dimensionnement de l'évidement de réception de moyen de fixation (19) et la géométrie et/ou le dimensionnement du moyen de fixation (9, 9', 10, 10') devant être reçu dans cet évidement de réception de moyen de fixation (19) sont conçus de telle sorte qu'au moins dans l'état de montage final, l'élément d'amortissement (13) vienne en contact au moins en partie avec le moyen de fixation (9, 9', 10, 10') dans la région de l'évidement de réception de moyen de fixation (19).
